Europäisches Patentamt

European Patent Office

Office européen des brevets

(11) Publication number: **0 172 048**
**A2**

# EUROPEAN PATENT APPLICATION

(21) Application number: **85401220.0**

(51) Int. Cl.⁴: **H 04 L 27/00**

(22) Date of filing: **19.06.85**

(30) Priority: **19.06.84 CA 456959**

(43) Date of publication of application:
**19.02.86 Bulletin 86/8**

(84) Designated Contracting States:
**BE DE FR GB IT LU NL**

(71) Applicant: INTERSAT RADIO COMMUNICATIONS INC.
69 Yonge Street 15th Floor
Toronto Ontario M5E 1K3(CA)

(72) Inventor: Aknine, Gérard Bernard Lette at Lette,
Whittaker
Guardian Canada Tower Suite 300 181 University Av.
Toronto Ontario M5H 3M7(CA)

(74) Representative: Martin, Jean-Jacques
Cabinet REGIMBEAU Corre, Martin, Schrimpf, Warcoin,
Ahner 11, rue Franz Heller
F-35000 Rennes(FR)

(54) A method of transmitting digital data by modulating a high frequency signal.

(57) The present invention relates to a method of transmitting digital data by modulating a high frequency signal.

The method comprises the steps of: converting digital data into a baseband signal, said baseband signal being a low frequency signal which is modulated by the digital data using a first mode of modulation; using a local oscillator to produce a high frequency carrier, and modulating the high frequency carrier with the said baseband signal using a second mode of modulation; and feeding the resulting modulated carrier to a transmitter.

FIG.5

EP 0 172 048 A2

**0172048**

A METHOD OF TRANSMITTING DIGITAL DATA BY MODULATING
A HIGH FREQUENCY SIGNAL.

The present invention relates to a method of transmitting digital data by modulating a high frequency signal.

BACKGROUND OF THE INVENTION

There are various known systems for modulating a high frequency signal with digital data in order to transmit the data by radio. The most commonly used type of modulation is frequency shift keying (FSK) in which a constant amplitude carrier provided by a local oscillator has its frequency shifted from a given value (e.g. by $\pm 200$ kHz) at the rate of the data to be transmitted. Thus an excursion of +200 kHz may be used to represent a 1 in transmission while an excursion -200 kHz represents a 0. This mode of transmission is used in particular for radio transmission of strings of characters which are directly usable by teletypes (RTTY transmission).

This type of transmission, which is the most widely used for transmitting digital data, is nevertheless subject to several drawbacks.

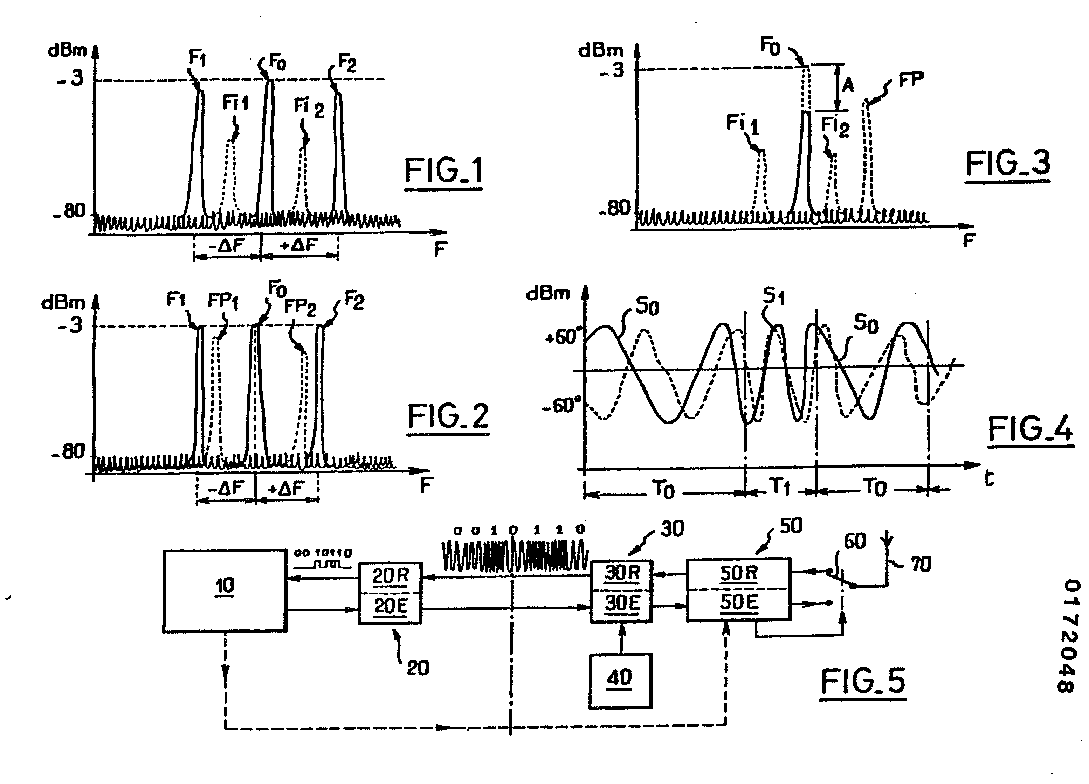

Firstly, the spectrum of the transmitted signal is as shown in Figure 1: on either side of a peak at the central frequency $F_0$, there are two peaks at frequencies $F_1$ and $F_2$ corresponding to the data transmitted at an excursion of $\pm F$.

2

However, disturbances occur due to intermodulation phenomena which take place when the digital signals are transposed into a baseband signal which is applied to the transmitter's mixer. These intermodulation phenomena show up as spectrum lines $FI_1$ and $FI_2$ which may occur within the frequency excursion range and which are thus transmitted at the same time as the carrier. Further, interference frequencies $FP_1$ and $FP_2$ (shown in the spectrum diagram of Figure 2) may also be present in the signal as received, and will consequently disturb demodulation.

Such interference is particularly troublesome when transmission is taking place at decametric wavelengths. In this range of wavelengths, there are very many high power transmitters, in particular international short wave broadcasting stations. Further, propagation distances are often very great due to reflection phenomena in the ionosphere (indeed that is why these wavelengths are used for broadcasting to distant countries).

It has nevertheless appeared desirable to use this frequency range for transmitting digital data, e.g. data for radio locating mobile vehicles. The possibility of propagation via the ionosphere which is a disadvantage is so far as it widens the risk of picking up unwanted transmissions, nonetheless has the important advantage of being able to transmit data over distances that may vary from a few kilometers to several thousand kilometers.

The selected band ensures continuity of coverage from short distances to long distances depending on whether the propagation is direct (ground wave) or via the ionosphere (reflected wave).

Preferred implementations of the present invention provide a modulation method which avoids the above-mentioned risks and which provdes the transmitted signals with very high immunity from received interference which could perturb signal demodulation.

## SUMMARY OF THE INVENTION

The present invention provides a method consisting of:

converting digital data into a baseband signal, said baseband signal being a low frequency signal which is modulated by the digital data using a first mode of modulation;

using a local oscillator to produce a high frequency carrier, and modulating the high frequency carrier with the said baseband signal using a second mode of modulation; and

feeding the resulting modulated carrier to a transmitter.

Two stages of modulation are thus used: firstly the digital data is used to produce a modulated low frequency baseband signal; and secondly a high frequency carrier is modulated by the already modulated baseband signal.

This two-stage modulation, in baseband and at high frequency, should be distinguished from methods in which two forms of modulation are applied to the same carrier, for example when a carrier is simultaneously amplitude and frequency modulated, or simultaneously amplitude and phase modulated. In such combined modulation methods as applied to a single carrier, the baseband modulating signal is not itself prior modulated.

The first mode of modulation is preferably frequency modulation, and the second mode is preferably amplitude modulation.

In particular, this combination has the advantage that since the spectrum lines due to intermodulation are frequency shifted relative to the central carrier, they no longer interfere with carrier demodulation since the carrier is now amplitude modulated rather than being frequency modulated as is the case for RTTY transmissions.

In a second implementation, both the first and the second modes of modulation are frequency modulation.

In a third implementation the first mode of modulation is frequency modulation while the second mode is phase modulation.

In a variant of the above modes (in which the baseband is generally frequency modulated), the already modulated baseband signal is modulated a second time with the same digital data using an auxiliary mode of modulation that is different from the first mode. This is done prior to modulating the carrier with the baseband signal.

The auxiliary modeof modulation which is in addition to the first mode of modulation may be phase modulation for example.

Three types of modulation are thus combined (two in baseband and one for the carrier) thus ensuring that the received signal can be successfully demodulated, even in the presence of a very poor signal to noise ratio. In this specific example, it is no longer a case of detecting two amplitudes of fixed phase and frequency, but of detecting two amplitudes of fixed frequency and of phase which is varying at the rate of the digital data to be transmitted.

## BRIEF DESCRIPTION OF THE DRAWING

An implementation of the invention is described by way of example with reference to the accompanying drawing, in which:

Figures 1 and 2 as described above, are spectrum diagrams showing the effect of prior modulation techniques as transmitted and as received, respectively;

Figure 3 corresponds to Figure 2 (spectrum diagram on reception) for one implementation of the present invention;

Figure 4 shows the waveform of the baseband signal when it is both frequency and phase modulated; and

Figure 5 is a block diagram of a transmitter/receiver system for transmitting digital data in accordance with the invention.

## DETAILED DESCRIPTION OF THE DRAWING

Figure 3 shows the received spectrum of a high frequency carrier which has been amplitude modulated by a frequency modulated baseband signal. The carrier is fixed at frequency $F_0$ and its amplitude A varies as a function of the

0172048

baseband modulating signal. Since the modulation is amplitude modulation, it can be seen that the intermodulation lines $FI_1$ and $FI_2$ do not disturb demodulation, and that the same is true interference frequenies FP even if they are very close to the frequency of the carrier $F_o$.

In a variant it is possible to combine frequency modulation and phase modulation in the baseband signal as is shown in Figure 4 which is a waveform diagram of the baseband signal prior to its being used to modulate the high frequency carrier.

The baseband signal is in the form of a succession of periods $T_0$ and $T_1$ which correspond respectively to the 0s and to the 1s of the digital data to be transmitted. The periods $T_0$ are constituted for example by sinewave $S_0$ of constant amplitude at a frequency of 1300 Hz which is phaseshifted by +60° from the time origin. The periods $T_1$ are similarly constituted by a sinewave $S_1$ of the same constant amplitude as the signal $S_0$ but at a frequency of 2100 Hz and phase shifted by -60° relative to the time origin.

Figure 5 is a block diagram of a transmitter/receiver system for implementing the method of the invention. A digital circuit 10 delivers binary data to be transmitted in the form of a succession of binary 0s and 1s. This data is modulated in the portion 20E of a modem 20 which delivers a low frequency baseband signal that has been modulated by the binary data (e.g. in frequency only, or in frequency and in phase).

The baseband signal is delivered to the modulation input of a mixer stage 30E which also receives the high frequency carrier as generated by a local oscillator 40. The carrier frequency as modulated by the baseband signal appears at the output of the mixer and is fed to a high frequency transmitter power stage 50E which is connected to a transmission antenna 70 via a switch 60 (which switch is automatically connected to the transmitter when the presence of a baseband signal is detected at the input to the transmitter).

Reception takes place following a reciprocal path. The signal received by the antenna 70 passes through a high frequency stage 50R of the receiver (via the switch 60 which must be in the receive position). The high frequency signal is demodulated by a demodulator stage 30R which delivers a low frequency baseband signal at its output which is frequency modulated by the digital data. Decoding is performed by the demodulator portion 20R of the modem 20 connected to the data processing circuit 10.

The modem 20 may be a type FX 409 FFSK modem as commercialized by CML for performing frequency modulation, or a type CH 1760 commercialized by CERMETEK for performing phase modulation.

The transmitter 50 may, for example, be a transmitter having an output power of 150 W PEP in the 40 meter band, i.e. a transmitter for frequencies of 3 to 25 MHz and preferably tuned in the range of 6 to 7 MHz.

The transmitter is preferably a single side band transmitter.

In a variant, a pulse transmitter may be provided to transmit bursts of signals corresponding to digital data blocks. In which case, the transmit instruction is delivered directly by the digital data processing circuit 10. Such pulse operation (using pulses of about 100 $\mu$s duration) has the advantage of permitting much higher peaks of transmitter power that can be used in continuous operation. This increases transmitter range.

A transmission system in accordance with the invention thus makes it possible to transmit continuously at a minimum rate of 1200 bauds over distances lying in the range 0 to 2000 km with excellent transmission quality both during the day and during the night, and with very high immunity from powerful interfering transmissions as encountered at decametric wavelengths.

## CLAIMS

1.     A method of transmitting digital data by modulating a high frequency signal, the method comprising the steps of:

converting digital data into a baseband signal, said baseband signal being a low frequency signal which is modulated by the digital data using a first mode of modulation;

using a local oscillator to produce a high frequency carrier, and modulating the high frequency carrier with the said baseband signal using a second mode of modulation; and

feeding the resulting modulated carrier to a transmitter.

2.     A method according to claim 1, wherein the first mode of modulation is frequency modulation, and the second mode is amplitude modulation.

3.     A method according to claim 2, wherein the transmitter transmits in single sideband.

4.     A method according to claim 1, wherein both the first and the second modes of modulation are frequency modulation.

5.     A method according to claim 1, wherein the first mode of modulation is frequency modulation and the second mode is phase modulation.

6.      A method according to  Claim 1, wherein prior to modulating the carrier, the baseband signal which is already modulated with the digital data by means of a first mode of modulation is modulated a second time with the same digital data by means of an auxiliary mode of modulation which is different from the first.

7.      A method according to claim 6, wherein the first mode of modulation is frequency modulation, and the auxiliary mode of modulation is phase modulation.

8.      A method according to  Claim 1, wherein the transmitter is a pulse transmitter transmitting bursts of signals corresponding to blocks of digital data.

9.      A method according to any preceding claim, wherein the high frequency carrier has a frequency in the range of 3 MHz to 25 MHz.

FIG_1

FIG_2

FIG_3

FIG_4

FIG_5